# EUROPEAN PATENT APPLICATION

(11) **EP 1 674 254 A2**
(43) Date of publication of application: **28.06.2006**
(21) Application number: 05256420.0
(22) Date of filing: 15.10.2005
(51) Int. Cl.: B32B 27/08

(54) **High barrier film membrane**

(30) Priority: 21.12.2004 US 18878
(71) Applicant: Sonoco Development, Inc., Hartsville, South Carolina 29550 (US)
(72) Inventor: Srinivas, Nomula, Hartsville, SC 29550 (US)
(74) Representative: Main, Malcolm Charles

(57) **Abstract**

A mono-web film membrane is provided with high barrier properties, i.e., low oxygen transmission rates and low water vapor transmission rates. One structure that achieves such barrier properties includes a film core, a sealant on one side of the film core, a metallization-receptive coating on the other side of the film core, a metal vacuum deposited on the metallization-receptive coating, a protective coating on the metal, and an ink coating on the protective coating.

## Description

### Field of the Invention

The present invention relates to mono-web film structures. In particular, the invention relates to high barrier mono-web film structures.

### Background of the Invention

Easy open membranes are used extensively on composite cans, metal cans, and plastic containers. The membrane can be either directly sealed to the rim of a container or sealed to a metal ring that is seamed onto the container. For applications where high barrier properties (i.e., low oxygen transmission rates and low water vapor transmission rates) are desired, foil has generally been used as the barrier layer. In such applications, foil, which is a piece of thin and flexible sheet metal (e.g., household aluminum foil), is not used by itself. Rather, the foil is used as part of a foil membrane where the foil is laminated to paper or a film on one side and laminated to a sealant film or extrusion coated with a sealant on the other side. These foil membranes are expensive for such applications.

Attempts have been made to provide alternatives to the laminate foil membranes by replacing the foil with metallized, Al₂O₃-coated or SiOₓ-coated films. For example, U.S. 6,649,279 to Migliorini, et al. discloses a metallized film suitable for direct surface printing. The film includes a core layer of a film-forming polyolefin with a metal receiving skin layer disposed on one side of the core layer and a polymer skin layer disposed on the other side of the core layer. A metal layer may be deposited on the metal receiving skin layer and a topcoat layer may be disposed on the surface of the metal layer. The film allows for direct surface printing.

Also for example, U.S. Application 2003/0099851 to Mount, III, et al. discloses a multilayer metallized film having enhanced barrier and metal adhesion characteristics. The film includes a polyolefin core layer, a heat sealable layer adjacent one side of the core layer, and a barrier layer adjacent the other side of the core layer. Adjacent to and coextensive with the barrier layer may be a metallized skin layer. Adjacent to and coextensive with the metallized skin layer may be a laminate film.

Although these alternative structures can be used as membranes, they each have oxygen transmission rates and water vapor transmission rates (both measures of a membrane's barrier properties) greater than 0.01 cc/100in²/day and 0.01 g/100in²/day, respectively, and an overall thickness greater than 70 gauge. Thus, there is a need for a structure that can be manufactured as a thin, non laminate (i.e., a mono-web) that is capable of providing high barrier properties without using foil.

### Summary of the Invention

One embodiment is directed to a mono-web film membrane that includes a film core, a sealant on one side of the film core, a metallization-receptive coating on the other side of the film core, a metal vacuum-deposited on the metallization-receptive coating, a protective coating on the metal, and an ink coating on the protective coating. The film core is polyethylene terepthalate, nylon, polypropylene, polyethylene, or a copolymer of polyethylene terepthalate, polypropylene, or polyethylene. The metallization-receptive coating is an acrylate coating, polyvinyl alcohol, or ethylene vinyl alcohol copolymer. The protective coating is a lacquer or a vacuum acrylate coating.

Another embodiment is directed to a mono-web film membrane that includes a film core, an ink coating on at least a portion of one side of the film core, a metallization-receptive coating on the other side of the film core, a metal-vacuum deposited on the metallization-receptive coating, a protective coating applied to the metal, and a sealant applied to the protective coating. The film core is polyethylene terepthalate, nylon, polypropylene, polyethylene, or a copolymer of polyethylene terephthalate, polypropylene, or polyethylene. The metallization-receptive coating is an acrylate coating, polyvinyl alcohol, or ethylene vinyl alcohol copolymer. The protective coating is a lacquer or a vacuum acrylate coating. The sealant can be an extrusion coated sealant, a heat sealable coating, or a cold seal coating.

A further embodiment is directed to a mono-web film membrane that includes a film core, a sealant on one side of the film core, an oxide coating on the other side of the film core, a protective coating on the oxide coating, and an ink coating on at least a portion of the protective coating. The film core is polyethylene terepthalate, nylon, polypropylene, polyethylene, or a copolymer of polyethylene terephthalate, polypropylene, or polyethylene. The oxide coating is an aluminum oxide or a silicon oxide. The protective coating is a lacquer or a vacuum acrylate coating.

### Brief Description of the Drawings

For the purpose of illustrating the invention, there is shown in the drawings various forms which are presently disclosed; it being understood, however, that this invention is not limited to the precise arrangements and instrumentalities particularly shown.

FIG. 1 is a perspective view of a mono-web film membrane of the invention sealed to a can.

FIG. 2 is an exaggerated cross sectional view depicting a structure of the mono-web film membrane.

FIG. 3 is an exaggerated cross sectional view depicting another structure of the mono-web film membrane.

FIG. 4 is an exaggerated cross sectional view depicting yet another structure of the mono-web film membrane.

### Detailed Description of the Invention

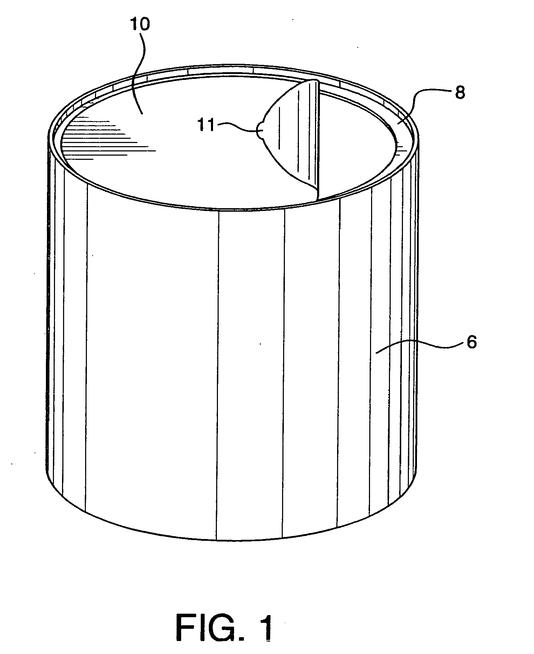

With reference to the drawings, where like numerals identify like elements, there is shown in FIG. 1 a mono-web film membrane 10 in accordance with an embodiment of the present invention. As used herein, the term monoweb film refers to a film that does not have individual laminate layers, but that can have one or more coatings. As illustrated, mono-web film 10 is used to seal a can 6 to form a package that can be used to house food products, electronics, and the like. Can 6 can be made from a plastic (e.g., polystyrene), a metal (e.g., aluminum), a paper (e.g., cardboard), and so on. Mono-web film 10 can be sealed directly to a rim 8 on can 6, it can be sealed onto a rim (not shown) that is then embedded into can 6, or it can be sealed by some other similar means known in the industry.

Although illustrated with a can 6, mono-web film 10 is not so limited. In fact, mono-web film 10 can be used in any application requiring a cost-effective barrier to oxygen and water vapor. For example, mono-web film 10 can be used in the packaging of various types of materials (e.g., food, pharmaceuticals, electronics), and in non-packaging applications requiring a strong barrier to oxygen and/or water vapor transmission.

In the context of the food packaging industry, mono-web film 10 is beneficial in that, if properly used, it can help prevent food from spoiling or having an off-flavor by limiting the amount of oxygen and water vapor that interacts with the food product. Similar benefits can be obtained when membrane 10 is used in other applications.

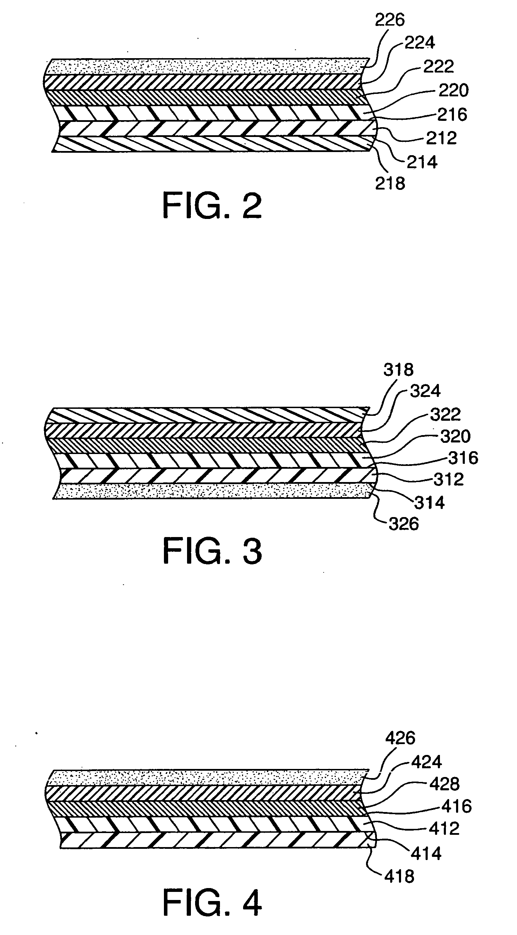

FIG. 2 illustrates an embodiment of a mono-web film membrane 210 that achieves high barrier properties with a non-laminate structure that includes a film core 212 that has a sealant 218 on a first side 214 of film core 212. Film core 212 can be selected from the group consisting of at least one of polyethylene terepthalate ("PET"), nylon, polypropylene ("PP"), polyethylene ("PE"), and copolymers of PET, PP (e.g., ethylene-propylene copolymer), and PE (e.g., ethylene-butylene copolymer, ethylene-hexene copolymer, and ethylene octene copolymer). Preferably, film core 212 consists of PET. Film core 212 preferably has a thickness of less than 60 gauge and more preferably less than 50 gauge.

Sealant 218 can be selected from the group consisting of at least one of amorphous PET, PP, PE, and copolymers of PET, PP, and PE. The copolymers of PET can, for example, be made by polymerizing a dicarboxylic acid component (e.g., copolymer of terephthalic acid with one or more diacids such as adipic, sebacic, and cyclohexane dicarboxylic acids) with a diol component (e.g., copolymers of ethylene glycol and/or 1,2-butanediol with one or more diols such as diethylene glycol, propanediol and disphenol A). The copolymers of PP can, for example, be made from one or more components such as ethylene, butylene, and vinyl acetate. The copolymers of PE can, for example, be made from one or components of methacrylate, vinyl acetate, butylene, acrylic acid, and methacrylic acid.

Preferably, sealant 218 is selected to be compatible with film core 212 such that a tie-layer (i.e., an adhesive layer) between sealant 218 and film core 212 is not necessary. For example, if film core 212 is PET, then sealant 218 must be a PET-based sealant, i.e., PET or co-polymers thereof. If film core 212 is a material other than PET, then sealant 218 can be any of PET, PP, PE, or copolymers thereof Copolymers can include amorphous polyester coatings, ethylene/methacrylic acid coatings, and polyester-based coatings. Sealant 218 can be co-extruded with film core 212 or it can be coated on film core 212 by heat seal coating or by cold seal coating.

On a second side 216 of film core 212 is a metallization-receptive coating 220. Metallization-receptive coating 220 can improve metal adhesion of the surface of film core 212 and it can allow for higher quality metallization (i.e.; less defects) and greater uniformity of a metallized coating. Metallization-receptive coating 220 can consist of acrylate coatings (i.e., coatings that include cross-linked acrylate monomers), polyvinyl alcohol, or ethylene vinyl alcohol copolymers. Preferably, metallization-receptive coating 220 is a thin, smooth coating that allows a metal 222 to be formed thereon. Metallization-receptive coating 220 can be co-extruded with film core 212 and sealant 218. Alternatively, metallization-receptive coating 220 can be co-extruded with film core 212 only or it can be coated on film core 212 using standard means known in the industry. Preferably, metallization-receptive coating is selected to be compatible with film core 212 such that a tie layer is not necessary.

Metal 222 can be formed on metallization-receptive coating 220 by vacuum deposition or other similar means. As such, metal 222 can comprise any metal that is amenable to vacuum deposition or other similar means. For example, metal 222 can be aluminum, nickel, chromium, gold, germanium, copper, silver, titanium, tungsten, platinum, tantalum, and some metal alloys. Preferably, metal 222 is vacuum-deposited aluminum. Metal 222 provides a substantial portion of the film's barrier properties.

As illustrated, metal 222 is coated with a protective coating 224, which is a lacquer (e.g., nitrocellulose, acrylic) or "vacuum acrylate coating" (i.e., an acrylate coating that is applied to metal 222 while in a vacuum). Protective coating 224 can be applied by standard means known in the industry. Protective coating 224 acts as shield, preventing metal 222 from being exposed to the atmosphere, and consequently preventing metal 222 from being damaged by atmospheric influences. Protective coating 224 also allows an ink coating 226 to be printed thereon. Ink coating 226 can be applied by conventional printing techniques using conventional inks. Ink coating 226 can be applied to the entire surface of protective coating 224 or only to a portion of the surface of protective coating 224.

Mono-web film 210 has barrier properties, i.e., oxygen transmission rate ("OTR") and water vapor transmission rate ("WVTR") that approach that of foil membranes, but at lesser manufacturing cost than that of foil membranes, and without the delamination problems associated with poorly laminated foil membranes.

Mono-web film 210 preferably has an OTR of less than or equal to about 0.01 cc/100in²/day. OTR is a measure of the amount of oxygen that passes through a material, in this case, mono-web film 210. OTR can be measured by standard means known in the industry.

Mono-web film 210 also preferably has a WVTR of less than or equal to about 0.01 g/100in²/day. WVTR is a measure of the amount of water vapor flow between two parallel surfaces under steady conditions through a unit area, under specified test conditions. WVTR can be measured by standard means known in the industry.

FIG. 3 illustrates an embodiment of a mono-web film membrane 310 that achieves high barrier properties with a non-laminate structure that includes a film core 312 having a first side 314 and a second side 316. Film core 312 preferably has a thickness of less than or equal to about 50 gauge and preferably is selected from a group consisting of at least one of PET, nylon, PP, PE, and copolymers of PET, PP, and PE.

Printed on first side 314 of film core 312 is an ink coating 326. The printing can be performed using conventional printing techniques and with conventional inks. Ink coating 326 can be applied to the entire first side 314 or only to a portion of first side 314.

As illustrated, second side 316 of film core 312 is coated with a metallization-receptive coating 320, which is an acrylate coating, polyvinyl alcohol, and ethylene vinyl alcohol copolymer. Metallization-receptive coating 320 can be co-extruded with film core 312 or alternatively, metallization-receptive coating 320 can be coated on film core 312 using standard means known in the industry.

Vacuum deposited on metallization-receptive coating 320 is a metal 322, which can comprise any vacuum depositable metal such as aluminum, nickel, chromium, gold, germanium, copper, silver, titanium, tungsten, platinum, tantalum, and some metal alloys. On top of metal 322 is a protective coating 324, which is a lacquer or a vacuum acrylate coating. Protective coating 324 can be applied by standard means known in the industry. Protective coating 324 is sealed with a sealant 318, which preferably can be applied by co-extrusion or by heat or cold sealing processes (i.e., an extrusion coated sealant, heat sealable coating, or a cold seal coating).

Mono-web film 310 preferably has an OTR of less than or equal to about 0.01 cc/100in²/day and a WVTR of less than or equal to about 0.01 g/100in²/day.

FIG. 4 illustrates an embodiment of a mono-web film membrane 410 that achieves high barrier properties with a non-laminate structure that includes a film core 412 having a first side 414 and a second side 416. Film core 412 preferably is selected from a group consisting of at least one of PET, nylon, PP, PE, and copolymers of PET, PP, and PE. On first side 414 is a sealant 418, which can comprise any known material that is capable as acting as a sealant. Sealant 418 can be co-extruded with or coated on first side 414. On second side 416 is an oxide coating 428, which consists of one of an aluminum oxide (e.g., Al₂O₃) or a silicon oxide (e.g., SiO₂). Oxide coating 428 can be coated on second side 416. Alternatively, an adhesion enhancing coating can be coated on a second side 416 with oxide coating 428 coated on the adhesion enhancing coating. The adhesion enhancing coating can include an acrylate coating, polyvinyl alcohol, or ethylene vinyl alcohol copolymers.

In this embodiment, oxide coating 428 is used in place of a metal to provide the substantial portion of the film's barrier resistance to water vapor and oxygen. Oxide coating 428 has an advantage over the metal coating in that oxide coating 428 is substantially transparent.

On top of oxide coating 428 is a protective coating 424 that is a lacquer or a vacuum acrylate coating. Protective coating 424 can be applied by standard means known in the industry. Preferably, protective coating 424 is substantially transparent. Protective coating 424 allows for printing thereon by conventional techniques using conventional inks. The printing forms an ink layer 426 on top of protective coating 424. Ink layer 426 can cover the entire top of protective coating 424 or only a portion of the top of protective coating 424.

With oxide coating 428 in place of a metal coating, mono-web film 410 has an OTR of less than or equal to about 0.05 cc/100in²/day and a WVTR of less than or equal to about 0.05 g/ 100in²/day.

It will be appreciated by those skilled in the art, that the present invention may be practiced in various alternate forms and configurations. The previously detailed description of the disclosed embodiments is presented for purposes of clarity of understanding only, and no unnecessary limitations should be implied there from.

## Claims

1. A mono-web film membrane comprising:
a film core with a first side and a second side, the film core selected from the group consisting of at least one of polyethylene terepthalate, nylon, polypropylene, polyethylene, and copolymers of polyethylene terepthalate, polypropylene, and polyethylene;
a sealant on the first side of the film core;
a metallization-receptive coating on the second side of the film core, selected from the group consisting of at least one of an acrylate coating, polyvinyl alcohol, and an ethylene vinyl alcohol copolymer;
a metal on the metallization-receptive coating;
a protective coating on the metal, consisting of a lacquer or a vacuum acrylate coating; and
an ink coating on the protective coating, the ink comprising conventional ink.

2. The mono-web film membrane of claim 1 wherein the sealant is selected from the group consisting of at least one of amorphous polyethylene terepthalate, polypropylene, polyethylene, and copolymers thereof.

3. The mono-web film membrane of claim 1 wherein the sealant comprises an extrusion coated sealant, a heat sealable coating, or a cold seal coating.

4. The mono-web film membrane of claim 1 wherein the metal is vacuum deposited.

5. The mono-web film membrane of claim 4 wherein the vacuum deposited metal is aluminum.

6. The mono-web film membrane of claim 1 wherein the ink coating is applied to only a portion of the protective coating.

7. The mono-web film membrane of claim 1 wherein the structure has an oxygen transmission rate of less than or equal to about 0.01 cc/100in²/day and a water vapor transmission rate of less than or equal to about 0.01 g/100in²/day.

8. The mono-web film membrane of claim 1 wherein the thickness of the film core is less than or equal to about 50 gauge.

9. A package comprising:
a can comprising a rim defining an opening in the can; and
the mono-web film membrane of claim 1 sealed to the rim of the can.

10. A high barrier mono-web film structure for use as a membrane for cans, the structure comprising in order:
a sealant consisting essentially of amorphous polyethylene terepthalate;
a film core consisting essentially of polyethylene terepthalate at a thickness of less than or equal to about 50 gauge;
a metallization-receptive coating consisting essentially of polyvinyl alcohol;
a metal consisting essentially of a vacuum deposited aluminum on the metallization-receptive coating; and
a protective coating on the metal, consisting essentially of a lacquer;
wherein the structure has an oxygen transmission rate of less than or equal to about 0.01 cc/100in²/day and a water vapor transmission rate of less than or equal to about 0.01 g/100in²/day.

11. The high barrier mono-web film structure of claim 10 wherein the structure further comprises an ink coating on a portion of the protective coating.

12. A mono-web film structure for use as a membrane, the structure comprising:
a film core with a first side and a second side, the film core selected from the group consisting of at least one of polyethylene terepthalate, nylon, polypropylene, polyethylene, and copolymers thereof;
an ink coating on at least a portion of the first side of the film core;
a metallization-receptive coating on the second side of the film core, selected from the group consisting of at least one of an acrylate coating, polyvinyl alcohol, and an ethylene vinyl alcohol copolymer;
a vacuum deposited metal on the metallization-receptive coating;
a protective coating on the metal, consisting of a lacquer or a vacuum acrylate coating; and
a sealant on the protective coating, comprising an extrusion coated sealant, a heat sealable coating, or a cold seal coating.

13. The mono-web film structure of claim 12 wherein the structure has an oxygen transmission rate of less than or equal to about 0.01 cc/100in²/day and a water vapor transmission rate of less than or equal to about 0.01 g/100in²/day.

14. The mono-web film structure of claim 13 wherein the thickness of the film core is less than or equal to about 50 gauge.

15. A mono-web film structure for use as a membrane, the structure comprising:
a film core with a first side and a second side, the film core selected from the group consisting of at least one of polyethylene terepthalate, nylon, polypropylene, polyethylene, and copolymers thereof;
a sealant on the first side of the film core;
an oxide coating on the second side of the film core, the coating selected from the group consisting of at least one of aluminum oxides and silicon oxides;
a protective coating on the oxide coating, consisting of a lacquer or a vacuum acrylate coating; and
an ink coating on at least a portion of the protective coating, comprising conventional ink.

16. The mono-web film structure of claim 15 wherein the oxide coating is substantially transparent.

17. The mono-web film structure of claim 15 wherein the structure has an oxygen transmission rate of less than or equal to about 0.05 cc/100in²/day and a water vapor transmission rate of less than or equal to about 0.05 g/100in²/day.
